# EUROPÄISCHE PATENTSCHRIFT

(11) **EP 1 157 646 B1**
(45) Veröffentlichungstag und Bekanntmachung des Hinweises auf die Patenterteilung: **27.10.2004**
(21) Anmeldenummer: 01110684.6
(22) Anmeldetag: 02.05.2001
(51) Int. Cl.: A47J 27/21

(54) **Behälter, insbesondere Wasserkocher**
Vessel, in particular kettle
Récipient, en particulier bouilloire

(30) Priorität: 23.05.2000 DE 10025445
(43) Veröffentlichungstag der Anmeldung: 28.11.2001
(73) Patentinhaber: BSH Bosch und Siemens Hausgeräte GmbH, 81739 München (DE)
(72) Erfinder: Kaiser, Helmut, 82515 Wolfratshausen (DE)
(74) Vertreter: Heyerhoff, Markus

(56) Entgegenhaltungen:
- EP-A- 0 487 889
- GB-A- 2 327 333

## Beschreibung

Die Erfindung geht aus von einem Behälter, insbesondere von einem Wasserkocher, nach dem Oberbegriff des Anspruchs 1.

Bekannte Wasserkocher besitzen einen Behälter mit einem Innenraum, der nach außen durch einen Behälterboden und eine Behälterwand begrenzt ist. Zum Ausgießen des Wassers besitzt die Behälterwand einen Ausguß bzw. eine Schnaupe. Um einen Wärmeverlust nach oben zu reduzieren, insbesondere bedingt durch die im Wasserdampf gespeicherte Wärme, ist bekannt, den Wasserkocher nach oben mit einem Behälterdeckel zumindest weitgehend zu verschließen. Zum Befüllen des Wasserkochers wird entweder der Behälterdeckel entfernt oder das Wasser wird über eine Öffnung der Schnaupe in den Innenraum des Wasserkochers eingefüllt.

Aus der EP 0 487 889 A1 ist eine Kanne für eine Kaffeemaschine bekannt, wobei die Kanne einen Deckel mit einem Trichter und einer Eintropföffnung aufweist, die zum Auffangen von aus der Kaffeemaschine tropfendem Kaffee vorgesehen ist.

Die Aufgabe der Erfindung besteht darin, einen gattungsgemäßen Behälter weiterzuentwickeln, insbesondere hinsichtlich dessen Bedienkomfort. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einem Behälter, insbesondere Wasserkocher, mit einem Innenraum, der nach außen durch zumindest einen Behälterboden, eine Behälterwand und einen Behälterdeckel begrenzt ist, und der zumindest einen Ausguß aufweist und bei dem der Behälterdeckel zumindest ein Bodenteil eines Befüllkanals bildet, über den durch eine Befüllöffnung der Innenraum befüllbar ist.

Es wird vorgeschlagen, daß sich der Befüllkanal in seiner Breite im wesentlichen über die gesamte Breite des Behälterdeckels erstreckt und daß die Befüllöffnung mit einer Öffnung des Ausgusses übereinskimmt. Es kann ohne den Behälterdeckel zu öffnen ein großer Befüllbereich erreicht werden, von dem aus die Flüssigkeit in den Innenraum des Wasserkochers geleitet werden kann. Ein entstehender Arbeitsaufwand beim Öffnen des Behälterdeckels vor dem Befüllen des Behälters und beim Schließen des Behälterdeckels nach dem Befüllen des Behälters kann eingespart und ein exaktes Positionieren des Ausgusses bei geschlossenem Behälterdeckel unter einem Wasserstrahl kann vorteilhaft vermieden werden. Es ist ein besonders komfortables Befüllen erreichbar.

Zum Leiten einer Flüssigkeit im Befüllkanal in eine bestimmte Richtung bzw. in Richtung einer Befüllöffnung kann der Behälter beim Befüllen von einem Bediener schräg gestellt und/oder der Befüllkanal kann vorteilhaft mit einer Neigung bzw. mit einem Gefälle in Richtung der Befüllöffnung ausgeführt werden, und zwar vorzugsweise in einem Bereich zwischen 2° und 40°. Besitzt der Befüllkanal ein Gefälle, kann der Behälter im abgestellten Zustand befüllt werden. Das Gefälle kann von einer gebogenen Fläche und/oder einer schräggestellten Ebene des Behälterdeckels gebildet sein. Erfindungsgemäß stimmt die Befüllöffnung mit einer Öffnung des Ausgusses überein, wodurch zusätzliche Öffnungen eingespart werden können. Insbesondere bei einem Wasserkocher kann vermieden werden, daß über zusätzliche Befüllöffnungen Wärme nach oben entweichen kann.

Kanalwände des Befüllkanals können grundsätzlich vom Behälterdeckel, von der Behälterwand oder einem dritten Bauteil gebildet sein. Ragt die Behälterwand zumindest im Bereich der Befüllöffnung in axialer Richtung wenigstens über das vom Behälterdeckel gebildete Bodenteil des Befüllkanals bzw. ist der Behälterdeckel zumindest teilweise im Behälter innenliegend ausgeführt, kann eine vorteilhafte Flüssigkeitsführung erreicht werden. Die Behälterwand kann die Flüssigkeit seitlich führende Kanalwände bilden, wodurch zusätzliche, die Kanalwände bildende Bauteile eingespart werden können, und insbesondere kann die Behälterwand die Flüssigkeit in gewünschter Flußrichtung nach dem Befüllkanal nach unten in den Innenraum des Behälters umlenken. Es kann sicher vermieden werden, daß die Flüssigkeit aus dem Befüllkanal über die Befüllöffnung strömt.

Ferner kann eine vorteilhafte Leitung der Flüssigkeit bzw. ein Rücklaufen vermieden werden, indem der Befüllkanal auf der der Befüllöffnung abgewandten Seite bzw. in entgegengesetzter Richtung der gewünschten Flußrichtung der Flüssigkeit eine durch eine Erhöhung gebildeten Rücklaufschutz aufweist. Die Erhöhung kann durch den Behälterdekkel, durch die Behälterwand oder durch ein drittes Bauteil gebildet sein.

In einer weiteren Ausgestaltung der Erfindung wird vorgeschlagen, daß der Behälterdekkel zumindest teilweise Seitenwände des Befüllkanals bildet. Ein Übergang vom Bodenteil des Befüllkanals zu seinen Kanalwänden kann vorteilhaft mit einem Radius ausgeführt werden, wodurch der Befüllkanal bei geschlossenem Behälterdeckel vorteilhaft gereinigt werden kann. Ferner kann ein vorteilhaft formsteifer und optisch schöner Behälterdeckel erreicht werden.

Der Befüllkanal kann mit verschiedenen Querschnittsflächen ausgeführt sein, beispielsweise mit einer viereckigen, einer dreieckigen Querschnittsfläche oder mit einer Querschnittsfläche, die eine geschwungene Außenkontur aufweist usw. Sind die Seitenwände des Befüllkanals durch einen Randbereich des Behälterdeckels gebildet, der sich entlang einer gewünschten Flußrichtung einer Flüssigkeit erstreckt und der in axialer Richtung nach oben gezogen ist, kann eine besonders konstruktiv einfach herstellbare Behälterdeckelform erreicht werden. Um eine sichere Führung der Flüssigkeit im Befüllkanal zu gewährleisten, insbesondere bei der Befüllung eines Wasserkochers, besitzt der Randbereich vorteilhaft eine Höhe zwischen 2 und 20 mm.

In einer weiteren Ausgestaltung der Erfindung wird vorgeschlagen, daß zumindest in einem Teilbereich in einer das Bodenteil bildenden Deckseite des Behälterdeckels eine eine Flüssigkeit leitende Struktur eingebracht ist, und zwar besonders vorteilhaft Vertiefungen, die im wesentlichen in gewünschter Flußrichtung der Flüssigkeit verlaufen. Die Vertiefungen können im Querschnitt durch eine eckige und/oder durch eine geschwungene Kontur begrenzt sein. Ein Abspritzen der Flüssigkeit vom Bodenteil kann reduziert und die Führung der Flüssigkeit kann verbessert werden.

Um insbesondere einen innenliegenden Behälterdeckel in einer definierten Position vorteilhaft abstützen zu können, wird ferner vorgeschlagen, daß der Behälterdeckel auf zumindest einer im Innenraum angeordneten Auflagerippe abgestützt ist. Die Auflagerippe kann von einem separaten, an der Behälterwand befestigtem Bauteil gebildet oder kann vorteilhaft einstückig mit der Behälterwand ausgeführt sein. Wird der Behälterdeckel dagegen über ein im Innenraum angeordnetes Flüssigkeitssieb an der Behälterwand abgestützt, kann ein zusätzliches Bauteil bzw. eine Auflagerippe eingespart werden.

Die erfindungsgemäße Lösung kann bei verschiedenen, dem Fachmann als sinnvoll erscheinenden Behältern mit einem Behälterdeckel eingesetzt werden, wie beispielsweise bei Kaffeekannen, Teekannen, Wasserkochtöpfen usw., und besonders vorteilhaft bei Wasserkochern, die in der Regel direkt von einem Bediener befüllt werden müssen und die besonders vorteilhaft mit einem Behälterdeckel betrieben werden, um ein besonders schnelles Aufheizen des Wassers zu erreichen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: einen erfindungsgemäßen Wasserkocher schräg von oben
- Fig. 2: eine Variante nach Fig. 1 und
- Fig. 3: einen Schnitt durch einen Behälterdeckel aus Fig. 2 entlang der Linie III-III.

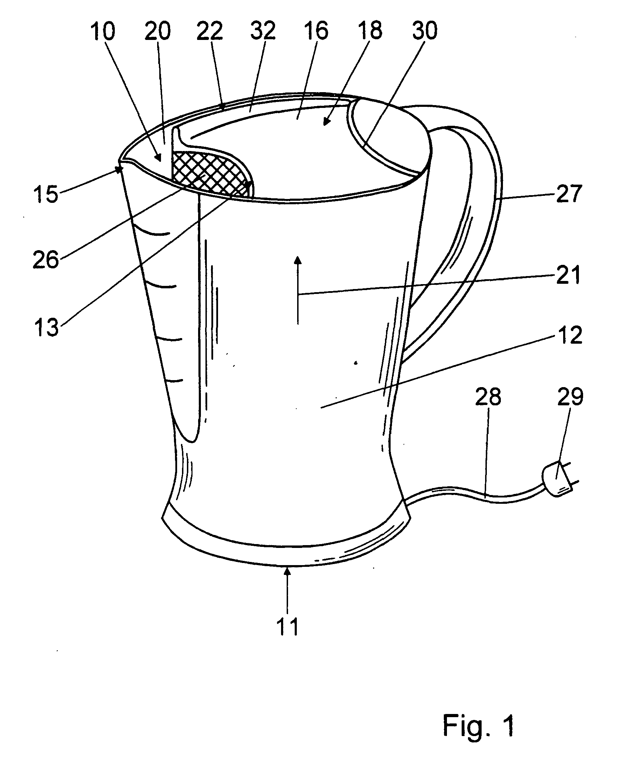

Fig. 1 zeigt einen Wasserkocher mit einem Innenraum 10, der nach außen durch einen Behälterboden 11, eine Behälterwand 12 und einen Behälterdeckel 13 begrenzt ist. In die Behälterwand 12 ist auf einer einem Handgriff 27 abgewandten Seite eine Schnaupe 15 angeformt. Am Behälterboden 11 ist ein nicht näher dargestelltes elektrisches Heizelement befestigt, das über ein Netzkabel 28 und einen Netzstecker 29 mit Strom versorgt werden kann. Der Behälterboden 11 ist aus einem Edelstahl und die Behälterwand 12 und der Behälterdeckel 13 sind aus einem wärmebeständigen Kunststoff hergestellt. Möglich ist jedoch auch, die Behälterwand und/oder den Behälterdeckel aus einem Metall herzustellen, beispielsweise aus Edelstahl, Aluminium usw.

Erfindungsgemäß bildet der Behälterdeckel 13 ein Bodenteil 16 eines Befüllkanals 18, über den durch eine Befüllöffnung 20 der Innenraum 10 mit Wasser befüllbar ist. Der Befüllkanal 18 besitzt in Richtung der Befüllöffnung 20, die mit einer Öffnung der Schnaupe 15 bzw. des Ausgusses übereinstimmt, ein Gefälle von ca. 15°.

Ferner sind Seitenwände 32 des Befüllkanals 18 durch einen Randbereich 22 des Behälterdeckels 13 gebildet, der sich entlang einer gewünschten Flußrichtung des Wassers erstreckt und der in axialer Richtung 21 nach oben gezogen ist. Der Behälterdeckel 13 schließt mit dem Randbereich 22 an der Behälterwand 12 ab. Der Randbereich 22 besitzt auf der der Befüllöffnung 20 abgewandten Seite eine Höhe von 5 mm und auf der der Befüllöffnung 20 zugewandten Seite eine Höhe von 15 mm. Ferner ist an den Behälterdekkel 13 auf der der Befüllöffnung 20 abgewandten Seite eine einen Rücklaufschutz bildende Erhöhung 30 angeformt.

Die Behälterwand 12 ragt in axialer Richtung 21 über den nach oben gezogenen Randbereich 22 des Behälterdeckels 13 und damit auch über das vom Behälterdeckel 13 gebildete Bodenteil 16 des Befüllkanals 18, wodurch das einzufüllende Wasser insbesondere in gewünschter Flußrichtung nach dem Befüllkanal 18 durch die Behälterwand 12 nach unten in den Innenraum 10 umgelenkt werden kann.

Der Behälterdeckel 13 ist aufklappbar und zudem abnehmbar ausgeführt. Im aufgesetzten Zustand ist der Behälterdeckel 13 auf der der Schnaupe 15 abgewandten Seite direkt auf der Behälterwand 12 und auf der der Schnaupe 15 zugewandten Seite über ein Flüssigkeitssieb 26 an der Behälterwand 12 abgestützt. Das Flüssigkeitssieb 26 ist im Innenraum 10 an der Behälterwand 12 lösbar befestigt.

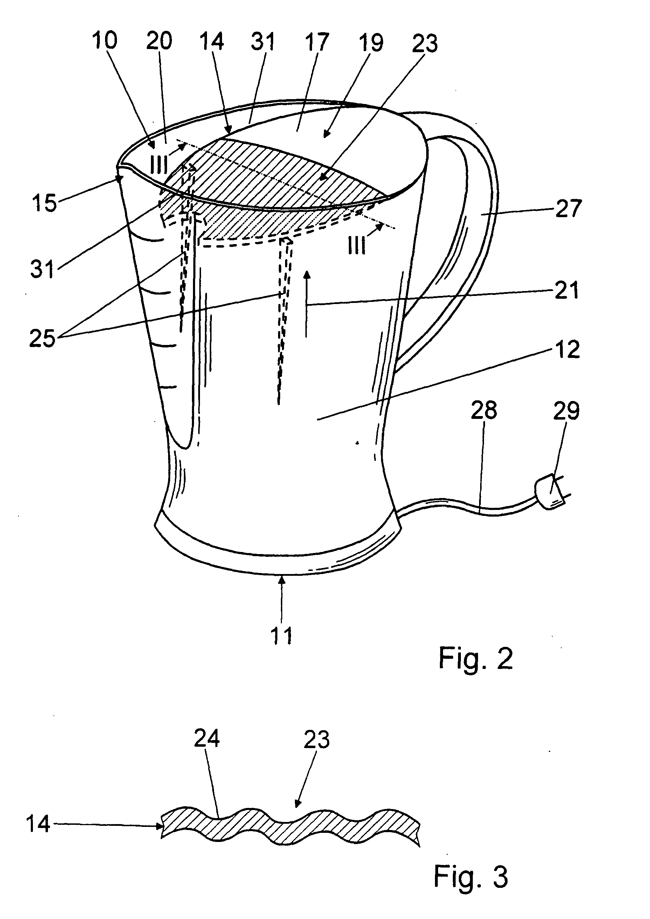

In Fig. 2 ist ein Wasserkocher mit einem alternativen Behälterdeckel 14 dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zum Ausführungsbeispiel in Fig. 1 verwiesen werden. Der Behälterdeckel 14 bildet ausschließlich ein Bodenteil 17 eines Befüllkanals 19, über den durch eine Befüllöffnung 20 Wasser in einen Innenraum 10 des Wasserkochers gefüllt werden kann. Der Befüllkanal 19 besitzt in Richtung der Befüllöffnung 20 ein Gefälle von ca. 30° bzw. ist der Behälterdeckel 14 innerhalb von einer Behälterwand 12 des Wasserkochers schräg angeordnet.

Die Behälterwand 12 ragt über das vom Behälterdeckel 14 gebildete Bodenteil 17 des Befüllkanals 19 und bildet Seitenwände 31 des Befüllkanals 19. In einem zur Befüllöffnung 20 weisenden Teilbereich ist in eine das Bodenteil 17 bildenden Deckseite des Behälterdeckels 14 eine das Wasser leitende Struktur 23 eingebracht (Fig. 2 und 3), und zwar Vertiefungen 24, die in gewünschter Flußrichtung des Wassers verlaufen. Der Behälterdeckel 14 besitzt in diesem Teilbereich eine wellenförmige Querschnittsfläche.

Der Behälterdeckel 14 ist aufklappbar und zudem abnehmbar ausgeführt. Im aufgesetzten Zustand ist der Behälterdeckel 14 auf der der Befüllöffnung 20 abgewandten Seite direkt auf der Behälterwand 12 und auf der der Befüllöffnung 20 zugewandten Seite über zwei im Innenraum 10 angeordnete Auflagerippen 25 an der Behälterwand 12 abgestützt. Die Auflagerippen 25 sind einstückig mit der Behälterwand 12 ausgeführt bzw. sind an die Behälterwand 12 angeformt.

### Bezugszeichen

- 10: Innenraum
- 11: Behälterboden
- 12: Behälterwand
- 13: Behälterdeckel
- 14: Behälterdeckel
- 15: Ausguß
- 16: Bodenteil
- 17: Bodenteil
- 18: Befüllkanal
- 19: Befüllkanal
- 20: Befüllöffnung
- 21: Richtung
- 22: Randbereich
- 23: Struktur
- 24: Vertiefung
- 25: Auflagerippe
- 26: Flüssigkeitssieb
- 27: Handgriff
- 28: Netzkabel
- 29: Netzstecker
- 30: Erhöhung
- 31: Seitenwand
- 32: Seitenwand

## Patentansprüche

1. Behälter, insbesondere Wasserkocher, mit einem Innenraum (10), der nach außen durch zumindest einen Behälterboden (11), eine Behälterwand (12) und einen Behälterdeckel (13, 14) begrenzt ist, und der zumindest einen Ausguß (15) aufweist und bei dem der Behälterdeckel (13, 14) zumindest ein Bodenteil (16, 17) eines Befüllkanals (18, 19) bildet, über den durch eine Befüllöffnung (20) der Innenraum (10) befüllbar ist, **dadurch gekennzeichnet, daß** der Befüllkanal (18, 19) sich in seiner Breite im wesentlichen über die gesamte Breite des Behälterdeckels (13, 14) erstreckt, und daß die Befüllöffnung (20) mit einer Öffnung des Ausgusses (15) übereinstimmt.

2. Behälter nach Anspruch 1, **dadurch gekennzeichnet, daß** der Befüllkanal (18, 19) in Richtung der Befüllöffnung (20) ein Gefälle aufweist.

3. Behälter nach einem der vorhergehenden Ansprüche, **dadurch gekennzeichnet, daß** die Behälterwand (12) zumindest im Bereich der Befüllöffnung (20) in axialer Richtung (21) wenigstens über das vom Behälterdeckel (13, 14) gebildete Bodenteil (16, 17) des Befüllkanals (18, 19) ragt.

4. Behälter nach einem der vorhergehenden Ansprüche, **dadurch gekennzeichnet, daß** der Befüllkanal (18) auf der der Befüllöffnung (20) abgewandten Seite einen durch eine Erhöhung (30) gebildeten Rücklaufschutz aufweist.

5. Behälter nach einem der vorhergehenden Ansprüche, **dadurch gekennzeichnet, daß** der Behälterdeckel (13) zumindest teilweise Seitenwände (32) des Befüllkanals (18) bildet.

6. Behälter nach Anspruch 5, **dadurch gekennzeichnet, daß** die Seitenwände (32) des Befüllkanals (18) durch einen Randbereich (22) des Behälterdeckels (13) gebildet sind, der sich entlang einer gewünschten Flußrichtung einer Flüssigkeit erstreckt und der in axialer Richtung (21) nach oben gezogen ist.

7. Behälter nach Anspruch 6, **dadurch gekennzeichnet, daß** der Randbereich (22) eine Höhe zwischen 2 und 20 mm aufweist.

8. Behälter nach einem der vorhergehenden Ansprüche, **dadurch gekennzeichnet, daß** zumindest in einem Teilbereich in einer das Bodenteil (17) bildenden Deckseite des Behälterdeckels (14) eine eine Flüssigkeit leitende Struktur (23) eingebracht ist.

9. Behälter nach Anspruch 8, **dadurch gekennzeichnet, daß** in der Deckseite des Behälterdeckels (14) Vertiefungen (24) eingebracht sind, die im wesentlichen in einer gewünschten Flußrichtung der Flüssigkeit verlaufen.

## Claims

1. Container, particularly kettle, with an interior space (10), which is bounded outwardly by at least a container base (11), a container wall (12) and a container lid (13, 14) and which has at least one spout (15) and in which the container lid (13, 14) forms at least one base part (16, 17) of a filling channel (18, 19), by way of which the interior space (10) can be filled via a filling opening (20), **characterised in that** the filling channel (18, 19) extends in its width over substantially the entire width of the container lid (13, 14) and that the filling opening (20) corresponds with an opening of the spout (15).

2. Container according to claim 1, **characterised in that** the filling channel (18, 19) has a drop in direction towards the filling opening (20).

3. Container according to one of the preceding claims, **characterised in that** the container wall (12) projects at least in the region of the filling opening (20) in axial direction (21) at least over the base part (16, 17), which is formed by the container lid (13, 14), of the filling channel (18, 19).

4. Container according to one of the preceding claims, **characterised in that** the filling channel (18) has a return run protection, which is formed by an elevation (30), on the side remote from the filling opening (20).

5. Container according to one of the preceding claims, **characterised in that** the container lid (13) forms, at least in part, side walls (32) of the filling channel (18).

6. Container according to claim 5, **characterised in that** the side walls (32) of the filling channel (18) are formed by an edge region (22) of the container lid (13), which extends along a desired flow direction of a liquid and is drawn upwardly in axial direction (21).

7. Container according to claim 6, **characterised in that** the edge region (22) has a height between 2 and 20 millimetres.

8. Container according to one of the preceding claims, **characterised in that** a structure (23) conducting liquid is formed at least in a part region in a top side, which forms the base part (17), of the container lid (14).

9. Container according to claim 8, **characterised in that** depressions (24), which extend substantially in a desired flow direction of the liquid, are formed in the top side of the container lid (14).

## Revendications

1. Récipient, notamment bouilloire, avec une cavité interne (10) qui est délimitée vers l'extérieur par au moins un fond de récipient (11), par une paroi de récipient (12) et par un couvercle de récipient (13, 14) et qui présente au moins un verseur (15) et sur lequel le couvercle de récipient (13, 14) forme au moins un élément de fond (16, 17) d'un canal de remplissage (18, 19), par l'intermédiaire duquel la cavité interne (10) peut être remplie à travers un orifice de remplissage (20), **caractérisé en ce que** dans sa largeur, le canal de remplissage (18, 19) s'étend sensiblement sur toute la largeur du couvercle de récipient (13, 14) et **en ce que** l'orifice de remplissage (20) concorde avec un orifice du verseur (15).

2. Récipient selon la revendication 1, **caractérisé en ce que** le canal de remplissage (18, 19) présente une inclinaison en direction de l'orifice de remplissage (20).

3. Récipient selon l'une quelconque des revendications précédentes, **caractérisé en ce qu'**au moins dans la zone de l'orifice de remplissage (20), la paroi du récipient (12) fait saillie en direction axiale (21) au moins par-dessus l'élément de fond (16, 17) du canal de remplissage (18, 19) qui est formé par le couvercle du récipient (13, 14).

4. Récipient selon l'une quelconque des revendications précédentes, **caractérisé en ce que** sur le côté détourné de l'orifice de remplissage (20), le canal de remplissage (18) présente une protection anti-retour formée par une proéminence (30).

5. Récipient selon l'une quelconque des revendications précédentes, **caractérisé en ce que** le couvercle du récipient (13) forme au moins partiellement des parois latérales (32) du canal de remplissage (18).

6. Récipient selon la revendication 5, **caractérisé en ce que** les parois latérales (32) du canal de remplissage (18) sont formées par une zone de bordure (22) du couvercle du récipient (13), qui s'étend le long d'une direction d'écoulement souhaitée pour un liquide et qui en direction axiale (21) est tirée vers le haut.

7. Récipient selon la revendication 6, **caractérisé en ce que** la zone de bordure (22) présente une hauteur comprise entre 2 et 20 mm.

8. Récipient selon l'une quelconque des revendications précédentes, **caractérisé en ce qu'**au moins dans une zone partielle, une structure conductrice de liquide (23) est ménagée dans une face de recouvrement du couvercle de récipient (14) formant l'élément de fond (17).

9. Récipient selon la revendication 8, **caractérisé en ce que** des creux (24) qui s'étendent sensiblement dans une direction d'écoulement souhaitée pour le liquide sont ménagés dans la face de recouvrement du couvercle de récipient (14).
